# EUROPÄISCHE PATENTSCHRIFT

(11) **EP 1 306 183 B1**
(45) Veröffentlichungstag und Bekanntmachung des Hinweises auf die Patenterteilung: **13.07.2005**
(21) Anmeldenummer: 02023741.8
(22) Anmeldetag: 23.10.2002
(51) Int. Cl.: B29C 44/12, B29C 44/58

(54) **Verfahren zum Einschäumen von Kabeln und Schäumwerkzeug hierfür**
Method and mould for embedding cables in foam
Procédé et moule pour enrober des câbles par de la mousse

(30) Priorität: 25.10.2001 DE 10152719
(43) Veröffentlichungstag der Anmeldung: 02.05.2003
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas, Dipl.-Ing.

(56) Entgegenhaltungen:
- EP-A- 0 105 535
- EP-A- 0 286 249
- FR-A- 2 789 353

## Beschreibung

Die Erfindung betrifft ein Verfahren zum Umschäumen eines mit Kabeln bestückten Lenkradskeletts. Die Erfindung betrifft außerdem ein Schäumwerkzeug zur Durchführung des Verfahrens.

Vor allem in der Automobiltechnik, und dort insbesondere im Bereich der Lenkräder, sind Bauteile häufig, die sowohl Abschnitte, die aus einem geschäumten oder gespritzten Kunststoff bestehen, als auch elektrische oder elektronische Komponenten mit den dazugehörigen Kabeln und Steckern aufweisen. Die elektrischen Leitungen können nachträglich in das fertig geschäumte Bauteil montiert werden, wenn durch das Schäumwerkzeug Führungskanäle vorgegeben sind. Diese Methode ist allerdings sehr arbeitsaufwendig, da nach dem Schäumprozeß ein weiterer Arbeitsschritt erfolgen muß. In bestimmten Fällen, zum Beispiel bei der Verwendung von eingeschäumten Schaltern oder Heizmatten für eine Lenkradheizung ist es erforderlich, auch die elektrischen Zuleitungen wenigstens teilweise mit einzuschäumen. In diesem Fall werden bisher die elektrischen Anschlußleitungen entweder aus der Schäumform herausgeführt (beim Schließen der Form müssen Vorkehrungen getroffen werden, eine Beschädigung des Kabels oder eines Steckergehäuses zu vermeiden) oder sie werden mit eingeschäumt, wobei nach dem Schäumprozeß ein Stecker aufwendig vom Schaum befreit und gereinigt werden muß.

Die FR 2 789 353 A offenbart ein Verfahren zur Herstellung von Fahrzeuginnenraumverkleidungen, insbesondere Fußmatten und dergleichen, die in ihrem Inneren geführt Kabel aufweisen. Dabei werden die Kabel zusammen mit einer Trägermatte in einer Schäumform plaziert, wobei die Kabelenden in einem Hohlraum in der Schäumform positioniert werden und daher beim anschließenden Ausschäumen der Form frei von Schaum bleiben.

Die FR-A-2 789 353 offenbart auch ein Schäumwertzeug mit einer hohlen Schäumform, die eine auszuschäumende innere Kammer begrenzt und einen wiederverschließbaren, gegenüber Schaumeintritt abgedichtete Hohlraum hat, der an die Kammer angrenzt, wobei wenigstens ein Kanal zwischen Hohlraum und Kammer vorgesehen ist, über den das Kabel in den Hohlraum geführt werden kann.

Die EP 0 286 249 A beschreibt ein mittels Insert-Technik hergestelltes Stecker-Bauteil, das einen Steckerabschnitt umfaßt, der während des Gießvorgangs so in einer Aussparung einer Gußform positioniert ist, daß der Steckerabschnitt frei von Formmasse bleibt.

Die EP 0 105 535 A offenbart ein Verfahren gemäß dem Obergriff des Anspruchs 1 und ein mit einer Polyurethan-Integralschaumstoff-Schicht umhülltes Sicherheitslenkrad, bei dem als Kontaktgeber eine in der Schaumstoff-Schicht eingeschäumte Metall-Kunststoff-Folie vorgesehen ist, deren Metallschicht über ein Kabel mit dem Schleifring der Kontakteinrichtung verbunden ist.

Zur Verkürzung der benötigten Arbeitszeit sowie zur Vermeidung von Beschädigungen der Bauteile während der Fertigung besteht Bedarf an einem einfachen Verfahren und einer Vorrichtung zum Umschäumen eines mit Kabeln bestückten Lenkradskeletts.

Dies wird durch die Merkmale des Ansprüches 1 und 3 gelöst.

Ein solches Verfahren weist die folgenden Schritte auf: Das Lenkradskelett wird samt eines an ihm angebrachten Kabels in einer Schäumform positioniert, ein Abschnitt des Kabels, der nicht im Schaum eingebettet werden soll, wird in einem wiederverschließbaren, in der Schäumform vorgesehenen, gegen Schaumeintritt abgedichteten Hohlraum positioniert, und der Hohlraum und die Schäumform werden geschlossen. Die Schäumform wird ausgeschäumt, wobei das Kabel zusammen mit dem Lenkradskelett eingeschäumt wird und der Hohlraum einen Raum im umschäumten Lenkradskelett ausspart, in den nachträglich ein Bauteil, insbesondere ein Elelctronikbauteil, positioniert wird, und danach werden die Schäumform und der Hohlraum zum Entnehmen des erzeugten Produkts geöffnet. Der nicht einzuschäumende Abschnitt des Kabels liegt also nicht zwischen den Teilen der Schäumform, sondern ist im Inneren der Schäumform angeordnet. Da er in einem Hohlraum angeordnet ist, der gegen das Eindringen von Schaum abgedichtet ist, kommt dieser Kabelabschnitt nicht mit Schaum in Berührung. Der Hohlraum ist so angeordnet, daß nach Öffnen des Hohlraums und der Schäumform das Produkt problemlos entnommen werden kann. Da das Kabel mitsamt dem Lenkradskelett m der Schäumform positioniert wird, läßt sich durch den Schäumprozeß gleichzeitig auch die Befestigung des Kabels bewerkstelligen. Das Verfahren eignet sich besonders gut zur einfachen, sicheren Montage einer Lenkradheizung. In diesem Fall kann eine vom Lenkradkranz verlaufende elektrische Zuleitung z.B. in den Nabenbereich des Lenkrads geführt werden, wo sie mit der entsprechenden Elektronik über einen Stecker verbunden werden kann. Das Kabel wird bevorzugt entweder entlang der Speiche geführt und mit dieser zusammen eingeschäumt oder in einer Wand eines Nabentopfes des Lenkrads eingeschäumt. In beiden Fällen wird der Stecker im Hohlraum plaziert, so daß er nicht mit dem Schaum in Berührung kommt. Nach der Entnahme des Lenkrades aus der Schäumform muß lediglich die Elektronik eingesetzt und der Stecker mit der Elektronik verbunden werden.

Das Verfahren ist besonders vorteilhaft, wenn der Abschnitt des Kabels mit einem Stecker oder Schalter versehen ist, der in dem Hohlraum positioniert wird. Das Kabel kann in diesem Fall komplett vor dem Schäumprozeß vormontiert werden.

Das Verfahren ist auch zur Herstellung von Fahrzeuginnenraumverkleidungsteilen, wie zum Beispiel Armaturentafeln, gut geeignet.

Das Verfahren wird in einem Schäumwerkzeug durchgeführt, mit einer hohlen Schäumform, die eine auszuschäumende innere Kammer begrenzt und einen wiederverschließbaren, gegenüber Schaumeintritt abgedichteten Hohlraum hat, der an die Kammer angrenzt, wobei wenigstens ein Kanal zwischen Hohlraum und Kammer vorgesehen ist, über den das Kabel in den Hohlraum geführt werden kann, und wobei der Hohlraum durch einen Deckel gegenüber der Kammer begrenzt ist und ein federnd angestellter Niederhalter an der Schäumform vorgesehen ist, der bei geschlossener Schäumform so auf den Deckel drückt, daß dieser den Hohlraum schließt. Eine derartige Anordnung erlaubt es, den Hohlraum auf einfache Weise zu verschließen und zur Entnahme des Produkts wieder zu öffnen.

In einer bevorzugten Ausführungsform ist der Hohlraum in einem Schäumkem des Schäumwerkzeugs vorgesehen. Auf diese Weise kann, bei einem Fahrzeuglenkrad, der Stecker im Bereich eines Hohlraums angeordnet werden, der sowieso zur Aufnahme eines Gassackmoduls freigehalten werden muß.

Im Kanal ist bevorzugt eine Dichtung angeordnet, die die Kammer gegen Schaumeintritt abdichtet.

In einer bevorzugten Ausführungsform ist an den Kanal angrenzend im Schäumwerkzeug eine zur Kammer offene Nut zur Aufnahme des Kabels vorgesehen. Diese Anordnung erlaubt, einen Großteil des Kabels einzuschäumen, während z.B. ein Stecker schaumfrei und beweglich bleibt.

Weitere Merkmale und Vorteile der Erfindung ergeben sich aus der nachfolgenden Beschreibung mit Bezug auf die beigefügten Zeichnungen. In diesen zeigen:
- Figur 1 einen schematischen Schnitt durch ein erfindungsgemäßes Schäumwerkzeug;
- Figur 2 eine schematische Ansicht eines Lenkradskeletts; und
- Figur 3 eine schematische Ansicht eines nach einem erfindungsgemäßen Verfahren hergestellten Lenkrads mit einer Lenkradheizung.

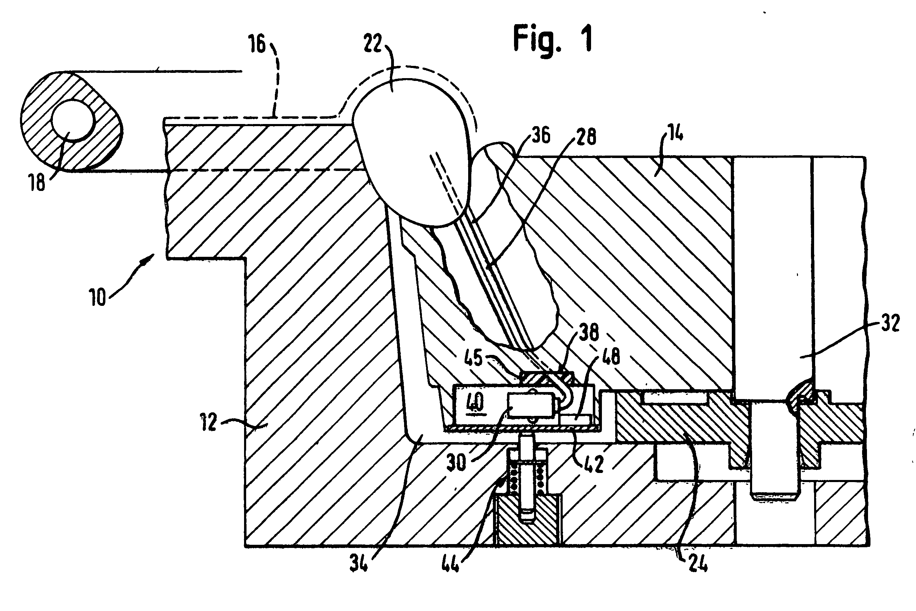

In Figur 1 ist ein Schäumwerkzeug 10 dargestellt, dessen Schäumform eine äußere Schale 12 sowie einen Kern 14 aufweist. Die Schäumform ist durch eine Deckelschale 16 verschließbar, die in Figur 1 nur angedeutet ist.

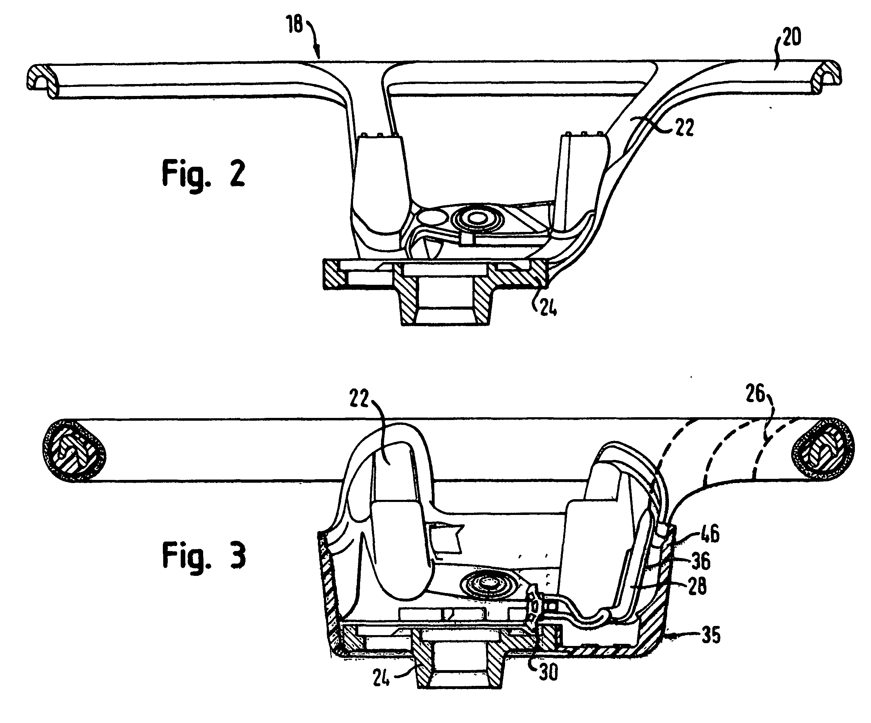

Das Schäumwerkzeug 10 dient zur Umschäumung eines Lenkradskeletts 18 (Figur 2). Das Skelett 18 weist einen Kranzabschnitt 20, mehrere Speichenabschnitte 22 sowie einen Nabenabschnitt 24 auf. Nabenabschnitt 24 und Kranzabschnitt 20 sind hier über die Speichenabschnitte 22 verbunden. Das Skelett 18 kann auf bekannte Weise z.B. in einem Aluminiumdruckgußverfahren gefertigt sein.

Im hier gezeigten Beispiel ist der Kranzabschnitt 20 mit einer (in Figur 3 angedeuteten) Lenkradheizung 26 versehen, deren elektrisches Versorgungskabel 28 in einem Stecker 30 endet.

Zum Umschäumen wird das Lenkradskelett 18 in die Deckelschale 16 der Schäumform eingesetzt, wobei über einen Träger 32 eine Zentrierung und Positionierung des Skelettes 18 im Werkzeug erreicht wird. Der Träger 32 dient auch zur Zentrierung des nun eingesetzten Kerns 14. Zwischen der äußeren Schale 12 und dem Kern 14 ist nun eine innere Kammer 34 gebildet, in der beim anschließenden Schäumprozeß ein Nabentopf 35 des Lenkrades entsteht. In diesem Nabentopf 35 kann dann zum Beispiel ein Gassackmodul (nicht gezeigt) aufgenommen werden.

In seiner zur inneren Kammer 34 gerichteten Wand weist der Kern 14 eine zur inneren Kammer 34 offene Nut 36 auf. Die Nut 36 erstreckt sich im hier gezeigten Beispiel von einem Punkt, an dem der Speichenabschnitt 22 in Kontakt mit dem Kern 14 kommt, dem sogenannten Speicheneinlauf, entlang der Wand des Kerns 14 in Richtung zum unteren Ende des Kerns in der Nähe des Nabenabschnitts 24. Am vom Speicheneinlauf entfernten Ende mündet die Nut 36 in einen im Kern 14 ausgebildeten Kanal 38. Der Kanal 38 verbindet die Nut 36 mit einem Hohlraum 40. Der Hohlraum 40 ist durch eine zur inneren Kammer 34 offene Ausnehmung im Kern 14, die von einem separaten Deckel 42 verschlossen werden kann, gebildet.

Der Deckel 42 wird von einem mit einer Feder beaufschlagten Niederhalter 44 geschlossen gehalten. Der Niederhalter 44 ist in der äußeren Schale 12 des Schäumwerkzeugs 10 angeordnet und von außerhalb des Schäumwerkzeugs 10 betätigbar. Der Niederhalter 44 hält während des Schäumprozesses den Deckel 42 fest angedrückt, so daß der Hohlraum 40 verschlossen und gegen Schaumeintritt abgedichtet ist.

Das Kabel 28 wird so in die Nut 36 eingelegt, daß der Stecker 30 im Hohlraum 40 zu liegen kommt. Das Kabel 28 durchläuft dabei den Kanal 38, in dem eine Dichtung 45 dafür sorgt, daß der Hohlraum 40 gegenüber Schaumeintritt aus Richtung der Nut 36 abgedichtet ist. Als Dichtung können gewöhnliche bekannte zweiteilige Gummidichtungen verwendet werden.

Beim anschließenden Schäumprozeß wird die innere Kammer 34 mit Kunststoffschaum 46, bevorzugt PUR-Schaum, ausgefüllt, der auch in die Nut 36 eindringt und das darin verlaufende Kabel 28 umschäumt. Auf diese Weise wird das Kabel 28 mit der in der inneren Kammer 34 ausgebildeten Wand des Nabentopfes 35 verbunden. Der Schaum 46 wird durch die Dichtung 45 im Kanal 38 sowie den Deckel 42 zurückgehalten, so daß die Kammer 40 schaumfrei bleibt. Das Kabel 28 übersteht die während des Schäumvorgangs herrschenden Bedingungen in der Ordnung von 115° C und 7 bar ohne Beschädigung.

Nach dem Erstarren des Kunststoffschaums 46 wird der Niederhalter 44 gelöst und so der Hohlraum 40 geöffnet. Anschließend wird die Form geöffnet, so daß der Kern 14 entnommen werden kann. Jetzt läßt sich das umschäumte Skelett 18 aus dem Schäumwerkzeug 10 entnehmen, wobei der Deckel 42 im Inneren des nun gebildeten Nabentopfs 35 zurückbleibt. Der Deckel 42 kann dann entnommen und im nächsten Schäumprozeß wiederverwendet werden.

Das Kabel 28 ist bis auf den Stecker 30 und einen kurzen, sich vom Stecker durch den Kanal 38 erstreckenden Abschnitt in der Wand des Nabentopfes eingeschäumt und so gegen unbeabsichtigte Beschädigungen geschützt (siehe Figur 3, wobei die Nut 36 aus Darstellungsgründen aufgeschnitten gezeigt ist).

Die Vertiefung im Nabentopf 35, die dem ehemaligen Hohlraum 40 entspricht, läßt sich dazu verwenden, ein Elektronikbauteil 48, z.B. für die Lenkradheizung 26 aufzunehmen. Das Elektronikbauteil 48 kann einfach mit dem Stecker 30 verbunden werden.

Es ist auch möglich, die Nut 36 so auszulegen, daß einer der Speichenabschnitte 22 zusammen mit der Zuleitung 28 darin aufgenommen ist.

## Patentansprüche

1. Verfahren zum Umschäumen eines mit Kabeln bestückten Lenkradskeletts, **gekennzeichnet durch** folgende Schritte:
- das Lenkradskelett (18) wird samt eines an ihm angebrachten Kabels (28) in einer Schäumform (12, 14) positioniert,
- ein Abschnitt des Kabels (30), der nicht im Schaum eingebettet werden soll, wird in einem wiederverschließbaren, in der Schäumform (12, 14) vorgesehenen Hohlraum (40) positioniert, wobei der Hohlraum (40) gegen das Eindringen von Schaum abgedichtet ist,
- der Hohlraum (40) und die Schäumform (12, 14) werden geschlossen,
- die Schäumform (12, 14) wird ausgeschäumt, wobei das Kabel zusammen mit dem Lenkradskelett eingeschäumt wird und der Hohlraum (40) einen Raum im umschäumten Lenkradskelett (18) ausspart,
- die Schäumform (12, 14) und der Hohlraum (40) werden zum Entnehmen des erzeugten Produkts geöffnet- und
- in den ausgesparten Raum wird nachträglich ein Bauteil, insbesondere Elektronikbauteil (46), positioniert.

2. Verfahren nach Anspruch 1, **dadurch gekennzeichnet, daß** der Abschnitt des Kabels mit einem Stecker (30) oder Schalter versehen ist, der in dem Hohlraum (40) positioniert wird.

3. Schäumwerkzeug zur Durchführung des Verfahrens nach einem der vorhergehenden Ansprüche, mit
einer hohlen Schäumform (12, 14), die eine auszuschäumende innere Kammer (34) begrenzt und einen wiederverschließbaren, gegenüber Schaumeintritt abgedichteten Hohlraum (40) hat, der an die Kammer (34) angrenzt,
wobei wenigstens ein Kanal (38) zwischen Hohlraum (40) und Kammer (34) vorgesehen ist, über den das Kabel (28) in den Hohlraum (40) geführt werden kann,
wobei der Hohlraum (40) durch einen Deckel (42) gegenüber der Kammer (34) begrenzt ist und ein federnd angestellter Niederhalter (44) an der Schäumform (12, 14) vorgesehen ist, der bei geschlossener Schäumform (12, 14) so auf den Deckel (42) drückt, daß dieser den Hohlraum (40) schließt.

4. Schäumwerkzeug nach Anspruch 3, **dadurch gekennzeichnet, daß** der Hohlraum (40) im Kern (14) der Schäumform vorgesehen ist.

## Claims

1. A method of foam-coating a steering wheel skeleton equipped with cables,
**characterized by** the following steps:
- the steering wheel skeleton (18), along with a cable (28) fitted thereto, is positioned in a foaming mold (12, 14),
- a portion of the cable (30) which is not to be embedded in the foam, is positioned in a resealable cavity (40) provided in the foaming mold (12, 14), the cavity (40) being sealed against the ingress of foam,
- the cavity (40) and the foaming mold (12, 14) are closed,
- the foaming mold (12, 14) is filled with foam, the cable together with the steering wheel skeleton being encased in foam, and the cavity (40) leaving a space in the foam-coated steering wheel skeleton (18),
- the foaming mold (12, 14) and the cavity (40) are opened to remove the product produced, and
- a component, in particular an electronic component (46), is subsequently positioned in the space left.

2. The method as claimed in claim 1, **characterized in that** the portion of the cable is provided with a plug (30) or switch which is positioned in the cavity (40).

3. A foaming tool for carrying out the method as claimed in any of the preceding claims, comprising
a hollow foaming mold (12, 14) which defines an inner chamber (34) to be filled with foam and has a resealable cavity (40) which is sealed against the ingress of foam and adjoins the chamber (34),
at least one passage (38) being provided between the cavity (40) and the chamber (34), through which the cable (28) can be introduced into the cavity (40),
the cavity (40) being delimited from the chamber (34) by a lid (42), and a spring-mounted holding-down device (44) being provided at the foaming mold (12, 14) which, with the foaming mold (12, 14) closed, presses against the lid (42) such that the same closes the cavity (40).

4. The foaming tool as claimed in claim 3, **characterized in that** the cavity (40) is provided in the core (14) of the foaming mold.

## Revendications

1. Procédé de moussage d'un squelette de volant de direction équipé de câbles,
**caractérisé par** les étapes suivantes :
- le squelette de volant de direction (18) est positionné conjointement avec un câble (28) monté sur celui-ci dans un moule de moussage (12, 14),
- un tronçon du câble (30), qui ne doit pas être noyé dans la mousse, est positionné dans une cavité (40) susceptible d'être refermée et prévue dans le moule de moussage, la cavité (40) étant étanchée vis-à-vis de la pénétration de mousse,
- la cavité (40) et le moule de moussage (12, 14) sont fermés,
- le moule de moussage (12, 14) est rempli de mousse, le câble étant enrobé de mousse conjointement avec le squelette de volant de direction, et la cavité (40) réservant un espace dans le squelette de volant de direction (18) moussé,
- le moule de moussage (12, 14) et la cavité (40) sont ouverts pour retirer le produit réalisé, et
- postérieurement, un composant, en particulier un composant électronique (46) est positionné dans l'espace réservé.

2. Procédé selon la revendication 1, **caractérisé en ce que** le tronçon du câble est pourvu d'un connecteur (30) ou d'un interrupteur qui est positionné dans la cavité (40).

3. Outil de moussage pour exécuter le procédé selon l'une des revendications précédentes, comportant
un moule de moussage (12, 14) creux qui délimite une chambre intérieure (34) à remplir de mousse et une cavité (40) susceptible d'être refermée, étanchée vis-à-vis d'une pénétration de mousse et qui est adjacente à la chambre (34),
entre la cavité (40) et la chambre (34) étant prévu au moins un canal (38) par l'intermédiaire duquel le câble (28) peut être introduit dans la cavité (40),
la cavité (40) étant délimitée par un couvercle (42) par rapport à la chambre (34), et sur le moule de moussage (12, 14) est prévu un serre-flan (44) mis en place de manière élastique, qui lorsque le moule de moussage (12, 14) est fermé, presse sur le couvercle (42) de telle sorte que celui-ci ferme la cavité (40).

4. Outil de moussage selon la revendication 3, **caractérisé en ce que** la cavité (40) est prévue au coeur (14) du moule de moussage.
